# FASCICULE DE BREVET EUROPEEN

(11) **EP 0 342 153 B1**
(45) Date de publication et mention de la délivrance du brevet: **03.03.1993**
(21) Numéro de dépôt: 89810321.3
(22) Date de dépôt: 28.04.1989
(51) Int. Cl.: B23Q 35/10, B23Q 33/00

(54) **Appareil auxiliaire pour le tournage de précision d'une pièce**
Zusatzvorrichtung zum präzisen Drehen eines Werkstücks
Auxiliary device for precisely turning a work piece

(30) Priorité: 10.05.1988 CH 1780/88
(43) Date de publication de la demande: 15.11.1989
(73) Titulaire: Kummer Frères SA, Fabrique de machines, CH-2720 Tramelan (CH)
(72) Inventeur: Leiber, Hans-Jürgen, CH-2720 Tramelan (CH)
(74) Mandataire: Fischer, Franz Josef

(56) Documents cités:
- CH-A- 332 924
- DE-A- 2 245 436
- DE-C- 844 848
- GB-A- 2 026 366
- JP-A-50 145 986
- JP-A-59 169 753

## Description

La présente invention a pour objet un appareil auxiliaire pour le tournage de précision d'une surface latérale d'une pièce fixée dans une broche d'une machine d'usinage selon le préambule de la revendication1.

Des appareils de ce genre sont déjà connus, notamment par la publication JP-A-50-145 986, qui décrit l'état de la technique le plus proche. La demande de brevet européen EP-A-88 810 239.9 du 14 avril 1988 (non publiée à la date de priorité de la présente demande) se rapporte également à un appareil du même genre.

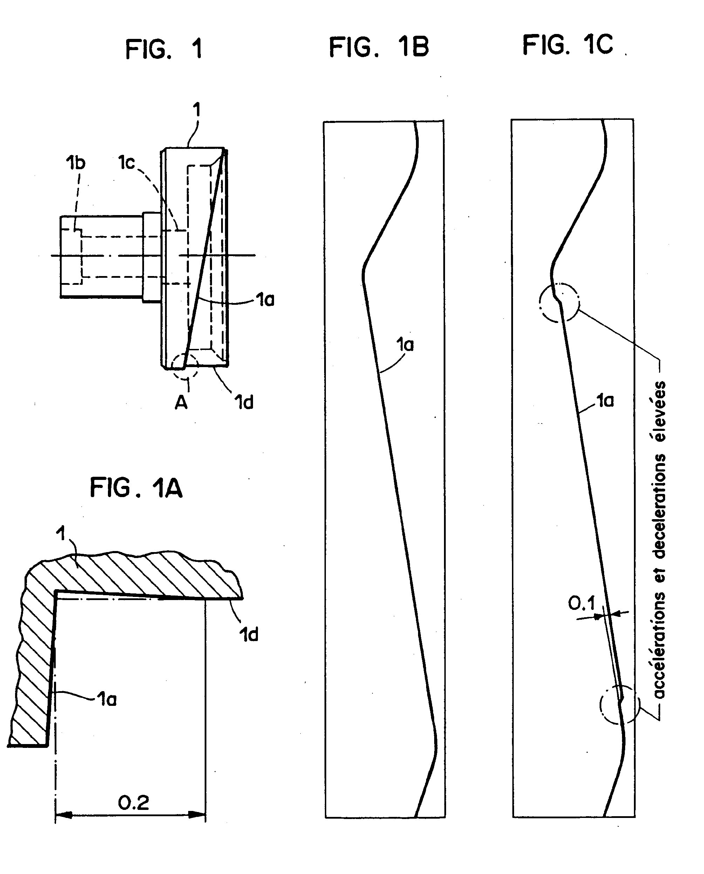

Ces appareils sont spécialement conçus pour permettre l'usinage rationnel de pièces comme les tambours porteurs des bandes d'enregistrement pour appareils vidéo ainsi que pour les enregistreurs à cassettes digitales. Un tambour de ce type est représenté à la fig. 1.

Les appareils déjà connus du genre mentionné donnent en général satisfaction. Ils permettent dans la plupart des cas d'usiner, avec les exigences de précision requises et de manière économique, l'épaulement de hauteur variable que la face extérieure du tambour doit présenter. L'allure de cet épaulement est définie par une came. En particulier, lorsque cet épaulement a l'allure représentée à la fig. 1B, c'est-à-dire une allure continue de sorte que les accélérations et les décélérations sont de valeur limitée, les dispositifs connus conviennent bien.

Cependant, il existe des cas où le profil des épaulements présente des modifications brusques, qui créent des écarts d'accélération et de décélération importants (voir fig. 1C).

L'usinage de telles pièces avec les appareils connus exige de travailler à vitesse réduite, donc dans des conditions peu économiques.

Le but de la présente invention est donc de créer un appareil du genre mentionné qui permette d'usiner, dans des conditions économiques, des pièces telles que celles des fig. 1 et 1C.

Selon l'invention, ce but est atteint par la présence, dans un appareil auxiliaire du genre mentionné au début, des caractéristiques distinctives de la revendication 1.

Une forme d'exécution de l'objet de l'invention va être décrite ci-après, à titre d'exemple, et en référence au dessin annexé dont
la fig. 1 est une vue en élévation du tambour à usiner,
la fig. 1A, une vue de détail à plus grande échelle de la zone A de la fig. 1,
la fig. 1B, une vue développée du profil d'un épaulement 1a dans un tambour usuel,
la fig. 1C, une vue semblable à celle de la fig. 1B montrant le profil d'un épaulement qui présente des accélérations et des décélérations élevées,
la fig. 2, une vue en plan de dessus schématique d'une machine de tournage qui est équipée de la forme d'exécution de l'appareil, donnée à titre d'exemple,
la fig. 3, une vue en plan de dessus de l'appareil,
la fig. 4, une vue en coupe longitudinale selon la ligne A-A de la fig. 3,
la fig. 5, une vue en coupe transversale selon la ligne B-B de la fig. 4,
la fig. 6, une vue en coupe transversale selon la ligne C-C de la fig. 5,
la fig. 7 une vue en coupe longitudinale selon la ligne D-D de la fig. 5,
la fig. 8 une vue montrant la position de l'appareil lors du tournage de la surface 1d et
la fig. 9 une vue montrant la position de l'appareil lors du tournage de finition de l'épaulement 1a.

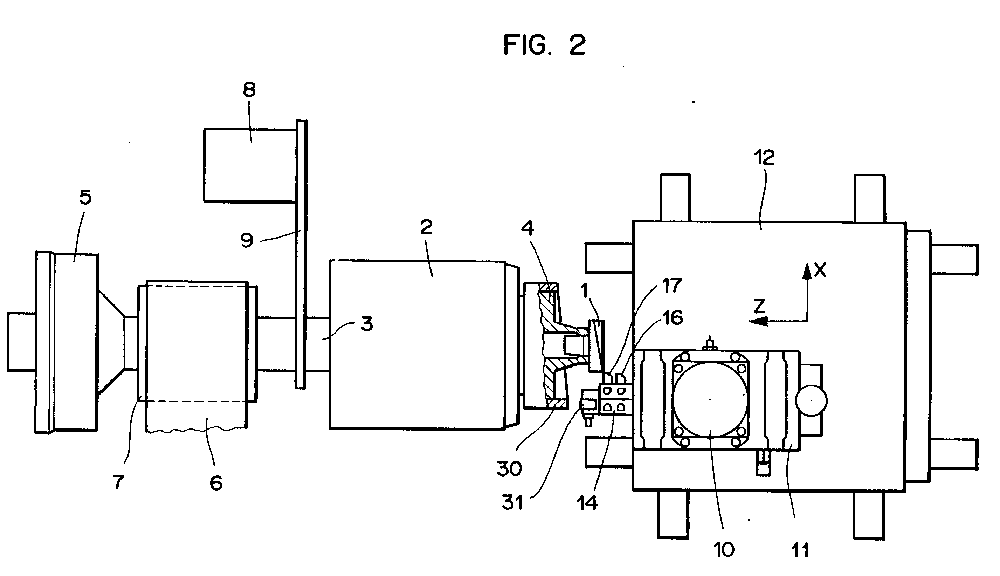

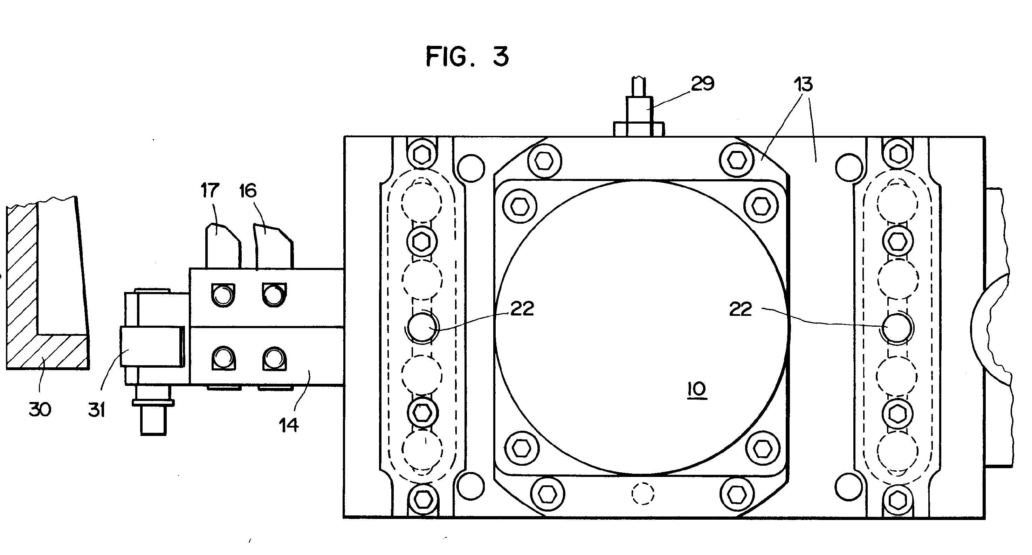

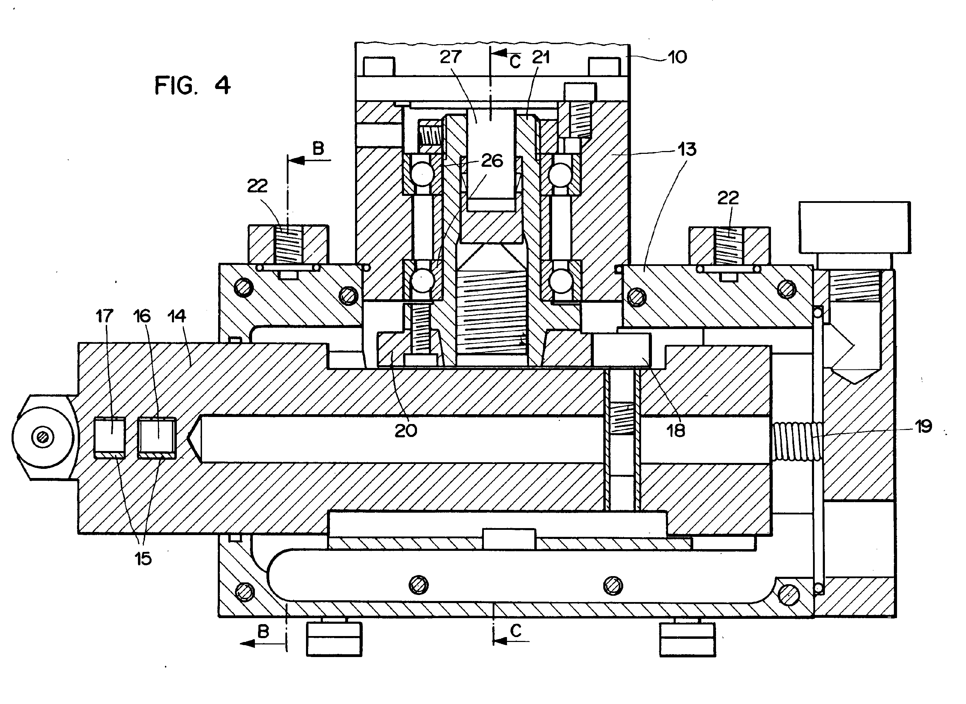

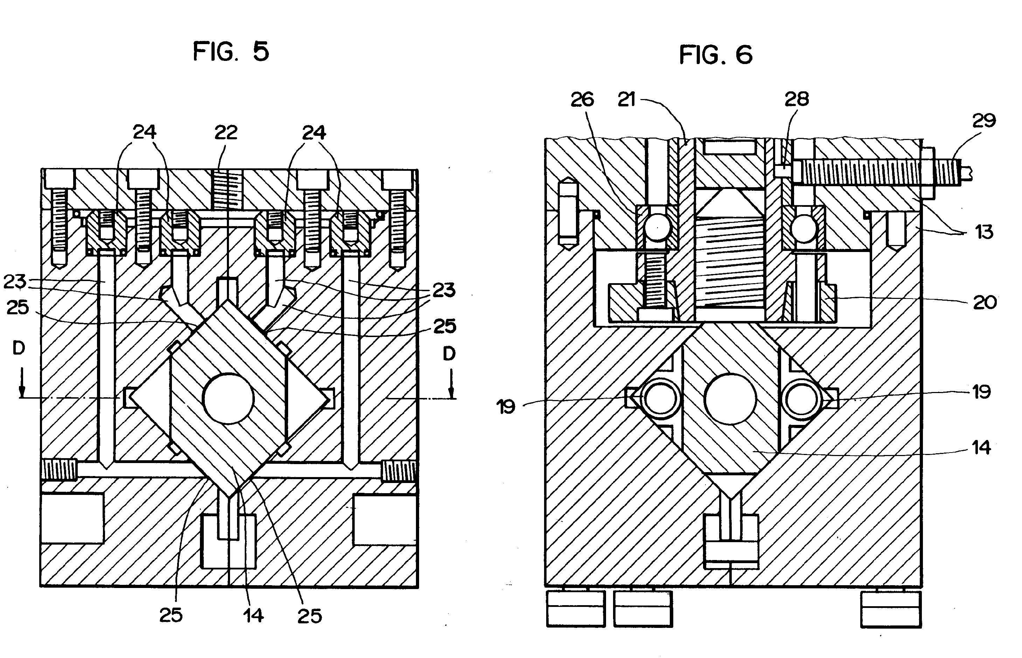

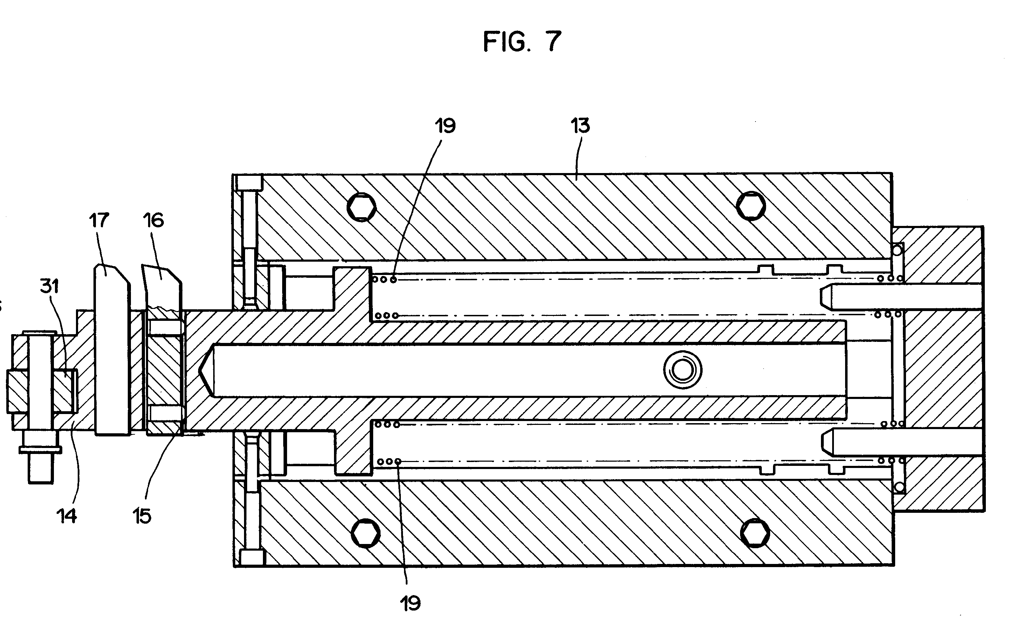

La machine de tournage selon les fig. 2-9 comporte une poupée 2 dans laquelle est disposée une broche principale 3 équipée d'une pince 4 à commande par cylindre pneumatique 5. Une came cloche 30 est montée coaxialement à la pince 4, et solidaire de celle-ci. Le profil de sa surface de commande est une reproduction exacte du profil de l'épaulement 1a à usiner sur la pièce 1. La broche 3 est entraînée par un moteur électrique (non représenté) relié à la broche 3 par un entraînement à courroie comprenant la courroie 6 et la poulie 7 solidaire de la broche 3. Une courroie crantée 9 relie d'autre part la broche 3 à un émetteur 8 à rotation incrémentielle, qui joue le rôle d'émetteur de signaux pour la commande du moteur d'entraînement 10 de l'appareil auxiliaire.

Ce dernier est désigné globalement par 11. Il est fixé sur le plateau supérieur d'un support à coulisse croisée 12 faisant partie de la machine. Il peut donc être amené en position de travail ou en position de repos par des déplacements du dispositif 12. L'appareil 11 comprend une embase 13 qui est fixée sur le plateau supérieur du dispositif 12. Un coulisseau 14 est guidé longitudinalement dans l'embase 13, de préférence par des moyens hydrostatiques. L'alimentation en huile pour le support hydrostatique est raccordée aux forures taraudées 22 et l'huile s'écoule dans les conduits capillaires 24 et les forures 23 jusqu'aux poches de suspension 25.

Une des parties extrêmes du coulisseau 14, qui s'étend en protubérance hors de l'embase 13, porte un galet tournant 31 qui joue le rôle de palpeur et peut coopérer avec la came 30. Cette même partie extrême du coulisseau 14 comporte deux logements 15 de porte-outils, dans lesquels sont fixés deux burins de tournage 16 et 17.

Au voisinage de son autre extrémité, le coulisseau 14 porte un second galet tournant 18, qui joue le rôle de palpeur en coopérant avec une seconde came 20.

Cette seconde came 20 est solidaire d'un arbre 21 qui est monté pivotant grâce à des paliers 26, dans l'embase 13. Une des extrémités de cet arbre est conformée en accouplement arbre-moyeu et raccordée à l'arbre d'entraînement 27 d'un moteur électrique 10 également monté sur l'embase 13. Le moteur électrique est, dans l'exemple décrit, un moteur pas à pas dont le nombre des pas par tour correspond au nombre des impulsions émises par le donneur d'impulsions 8, par tour, et dont la vitesse de rotation est déterminée, par ce donneur d'impulsions associé à la broche 3, à l'aide d'une unité de commande. L'ensemble est réglé de telle manière que la came 20 tourne en synchronisme exact avec la broche principale 3.

Pour l'entraînement de la came 20, on pourrait aussi utiliser un moteur à champ tournant ou à courant continu, équipé d'un rotor donneur d'impulsions, lequel entraînerait aussi la came 20 en synchronisme avec la broche principale, au moyen d'une commande appropriée.

Une goupille 28, plantée dans l'arbre 21 coopère avec un contact de proximité 29 de manière à interrompre un courant à chaque tour pour une position angulaire exactement déterminée, de l'arbre 21. Ainsi est émis un signal de référence qui se répète à chaque tour de la came 20. Le donneur d'impulsions 8 donne également, à chaque tour, pour une position angulaire précisément déterminée, un signal de référence.

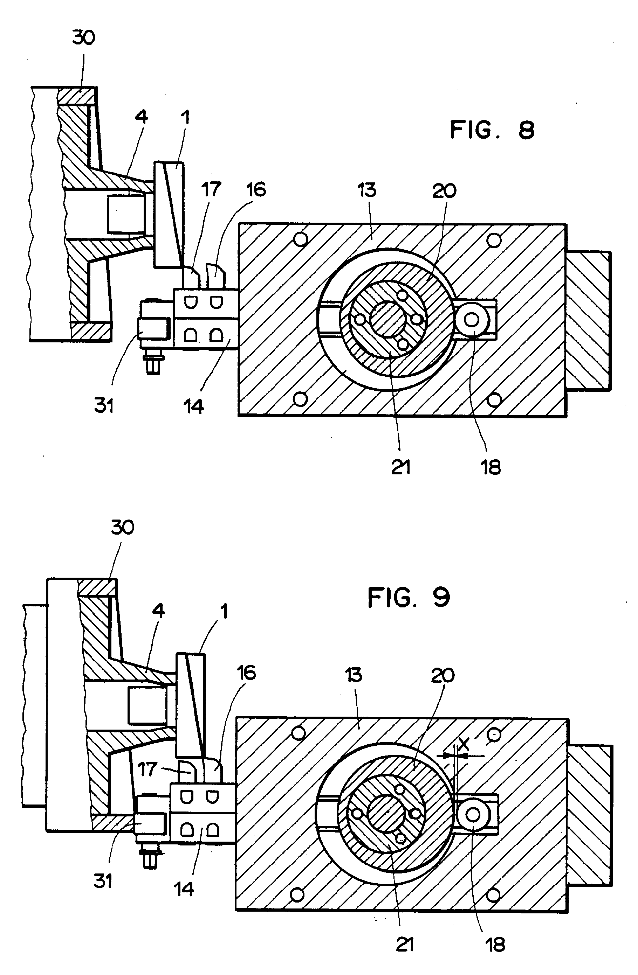

Le coulisseau 14 coopère finalement avec des moyens d'appui 19, constitués par un ou plusieurs ressorts, et on voit que selon la position de l'appareil imposée par le dispositif à coulisse croisée 12, il peut être tenu en place, dans le sens de son déplacement longitudinal soit par le galet 18 s'appuyant sur la came 20 (fig. 8) soit par le galet 31 s'appuyant sur la came 30 (fig. 9).

L'appareil décrit fonctionne de la manière suivante:
Une fois que les forures coaxiales 1b et 1c de la pièce 1 ont été usinées alors que cette pièce est serrée dans la pince 4, l'appareil 11 est immédiatement amené, par déplacement du dispositif 12, dans la position active de la fig. 8. La came 30 est alors sans effet et la commande du coulisseau 14 s'effectue par l'intermédiaire de la came 20. Le nombre de tours de la broche principale 3 est amené par freinage à une valeur faible tandis que le moteur 10 de l'appareil 11 fait tourner la came 20 pour l'amener dans son orientation de référence. Lorsque, dans cette situation, le rotor 8 donneur d'impulsions passe par l'orientation qui donne le signal de référence, le moteur 10 est enclenché et commence à tourner en synchronisme de nombre de tours et de position angulaire avec la broche 3. La vitesse de rotation de cette dernière est alors augmentée jusqu'à la valeur prévue pour l'usinage. Le moteur 10 suit cette accélération. Par l'intermédiaire du support 12, l'appareil effectue un déplacement de fonçage dans la direction Z et l'outil 17 usine tout d'abord la surface latérale extérieure 1d du tambour 1. Au cours de cette opération, l'épaulement 1a est également ébauché, car le coulisseau 14 auquel l'outil 17 est fixé suit le profil de la came 20 sous l'effet des ressorts 19. Il se déplace donc axialement en va-et-vient, à chaque tour.

Cet usinage peut être effectué à grande vitesse car le profil de la came 20 est, comme le montre la fig. 1b, continu, donc ne provoque pas de saut brusque d'accélération ou de décélération. Cependant, la précision de l'ébauchage de l'épaulement 1a sur la pièce 1 est suffisamment précis pour pouvoir être ensuite terminé par tournage en une passe. De plus, pendant l'opération qui vient d'être décrite, la came 30 est inactive, dans l'appareil 11. Ainsi, aucune force parasite, susceptible de perturber le tournage circulaire de la surface enveloppe 1d de la pièce 1, ne s'exerce sur les paliers de la broche 3.

Quand l'usinage de la surface 1a de la pièce 1 est terminé, le nombre de tours de la broche 3 est diminué par freinage et l'outil 17 est éloigné de la pièce 1 par un déplacement X de la coulisse croisée 12. Ensuite, ce dispositif déplace son plateau dans la direction Z et amène l'appareil auxiliaire 11 dans une position correspondant à la fig. 9.

Dans cette situation, l'outil 16, est dans une position avancée par rapport à l'outil 17. La came 30 est alors dans une position active, où elle agit sur le coulisseau 14 par l'intermédiaire du galet 31 et sous l'action des ressorts 19. Entre le galet 18 et la came 20 il existe maintenant un espace "X" de sorte que la came 20 est sans influence sur les déplacements du coulisseau 14.

Comme la came 30 est une réplique exacte du profil à usiner, selon la fig. 1C, l'usinage final de l'épaulement 1a et de la zone voisine de la surface 1d (Fig. 1A) s'effectue par une seule passe de tournage par déplacement de la coulisse croisée dans la direction X. Dès que cette opération est terminée, la coulisse croisée 12 se déplace et revient dans sa position de départ, ce qui permet de desserrer la pièce 1 terminée de la pince 4.

Grâce à l'emploi de deux cames dont l'une a un profil relativement continu et entre en action pour l'usinage de la surface 1d, et l'autre, fixée sur la broche est une reproduction exacte de l'épaulement 1a, et entre en action lors de la passe terminale, la surface 1d peut être usinée dans des conditions économiques, à vitesse élevée. Seule la passe finale de tournage en saignée, pour la terminaison de l'épaulement 1a, dont la durée n'est pas importante, nécessite une vitesse de rotation réduite. Comme la came 30, fixée sur la broche principale n'est pas en action par rapport à l'appareil 11 pendant l'usinage de la surface 1d, aucune force supplémentaire, susceptible de perturber la coaxialité de la surface latérale 1d, ne s'exerce pendant ce temps sur les paliers de la broche. De plus, il n'existe, entre l'appareil 11 et la broche 3, aucune liaison mécanique. De ce fait, la coulisse croisée 12 peut se déplacer sans entrave dans tout son domaine de travail. Pour la terminaison des forures 1b et 1c, la broche 3 peut être accélérée, à plus de 6000 t/min. Tous ces éléments contribuent au fait que l'appareil décrit permet d'usiner rationnellement même des tambours porte-bandes des appareils vidéo et des enregistreurs DAT dont les profils des épaulements présentent des sauts d'accélération ou de décélération marqués.

## Revendications

1. Appareil auxiliaire pour le tournage de précision d'une surface latérale (1a, 1d) d'une pièce (1) fixée dans une broche (3) d'une machine d'usinage, comportant
une embase (13) destinée à être fixée sur un support à coulisse croisée (12) de ladite machine d'usinage,
des moyens de coulisseau (14) mobiles dans une direction prédéterminée, par rapport à l'embase, contre l'action de moyens élastiques (19),
des moyens de fixation (15) de plusieurs outils de tournage (16,17), solidaires desdits moyens de coulisseau,
et des moyens de commande à came (20,30) comportant au moins une came entraînée en rotation en synchronisme avec la broche, lesdit moyens de commande assurant des déplacements des outils au cours desquels chacun d'eux usine une partie de ladite surface,
caractérisé en ce que
lesdits moyens de coulisseau sont constitués d'un coulisseau unique (14), et en ce que
lesdits moyens de commande à came comportent plusieurs cames à entraînement synchronisé, présentant chacune une surface de guidage, et plusieurs organes de transmission, montés sur ledit coulisseau (18,31), et destinés à coopérer chacun avec une des cames,
les surfaces de guidage des cames et les organes de transmission étant agencés de manière que lesdits organes de transmission peuvent être amenés successivement, par des déplacements de la coulisse croisée, dans des positions d'appui, dans lesquels ils appuient sur la surface de guidage de la came à laquelle ils correspondent, contre l'action desdits moyens élastiques, de manière à commander des déplacement du coulisseau.

2. Appareil auxiliaire selon la revendication 1, caractérisé en ce que les mouvements d'avance, de positionnement et de relevage des outils sont réalisés par les mouvements de la coulisse croisée sur laquelle ledit appareil auxiliaire est fixé.

3. Appareil auxiliaire selon l'une des revendications 1 ou 2, caractérisé en ce qu'il comporte deux cames.

4. Appareil auxiliaire selon la revendication 3, caractérisé en ce que la première came (30) est associée à une broche (3) de la machine d'usinage portant une pince de fixation (4) de la pièce (1), et en ce que la seconde came (20) est associée à un arbre auxiliaire (21) porté par l'embase (13) dudit appareil auxiliaire, et est entraînée en rotation en synchronisme de vitesse et de position angulaire avec la broche par un entraînement électrique (8,10).

5. Appareil auxiliaire selon la revendication 4, caractérisé en ce que la première came (30) est une came cloche, solidaire de la broche de la machine d'usinage et coaxiale à ladite broche.

6. Appareil auxiliaire selon la revendication 4, caractérisé en ce que la seconde came (20) est une came plate, et en ce que l'arbre auxiliaire (21) a son axe orienté perpendiculairement à la direction de déplacement du coulisseau.

7. Appareil auxiliaire selon les revendications 5 et 6, caractérisé en ce que lesdites cames sont amenées l'une après l'autre en position de travail par un déplacement de la coulisse croisée.

8. Appareil auxiliaire selon l'une des revendications précédentes, caractérisé en ce que le coulisseau est guidé dans l'embase, selon ladite direction prédéterminée, par un dispositif à palier hydrostatique (22,23,24,25).

## Patentansprüche

1. Zusatzvorrichtung zum präzisen Drehen einer seitlichen Fläche (1a, 1d) eines in einer Spindel (3) einer Bearbeitungsmaschine befestigten Werkstückes (1) mit
einer Befestigungsfläche (13), die dazu bestimmt ist, auf einem als Kreuzschlitten ausgebildeten Träger (12) der genannten Bearbeitungsmaschine befestigt zu werden,
Schlittenmittel (14), welche in einer vorbestimmten Richtung in bezug auf die Befestigungsfläche beweglich sind, entgegen der Wirkung von elastischen Mitteln (19),
Befestigungsmitteln (15) für mehrere Drehwerkzeuge (16, 17), welche einstückig mit den Schlittenmitteln sind,
und Nocken- oder Kurvenbetätigungsmittel (20, 30), welche mindestens einen synchron mit der Spindel in Rotation versetzten Nocken oder eine Kurve umfassen, wobei die Betätigungsmittel die Verschiebungen der Werkzeuge sichern, im Verlaufe derer jedes einen Teil der genannten Fläche bearbeitet,
dadurch gekennzeichnet, dass
die genannten Schlittenmittel aus einem einzigen Schlitten (14) bestehen und dass
die genannten Nockenbetätigungsmittel mehrere synchronisiert angetriebene Steuerglieder, von denen jedes eine Führungsfläche aufweist, und mehrere Uebertragungsorgane umfassen, welche auf dem genannten Schlitten (18, 13) befestigt sind, wobei jedes bestimmt ist, mit einem der Nocken zusammenzuwirken,
und die Führungsflächen der Nocken und die Uebertragungsorgane derart angeordnet sind, dass die genannten Uebertragungsorgane durch die Verschiebungen des Kreuzschlittens nacheinander in Stützpositionen zugeführt werden können, in welchen sie auf der Führungsfläche des Nockens, welchem sie entsprechen, gegen die Wirkung der erwähnten elastischen Mittel abstützen, um die Verschiebungen der Kulisse zu betätigen.

2. Vorrichtung nach Patentanspruch 1, dadurch gekennzeichnet, dass die Vorwärtsbewegungen, die Positionierbewegungen und die Hebebewegungen der Werkzeuge durch die Bewegungen des Kreuzschlittens realisiert werden, auf welchem die Zusatzvorrichtung befestigt ist.

3. Vorrichtung nach einem der Patentansprüche 1 oder 2, dadurch gekennzeichnet, dass sie zwei Nocken aufweist.

4. Vorrichtung nach Patentanspruch 3, dadurch gekennzeichnet, dass der erste Nocken (30) mit einer Spindel (3) der Bearbeitungsmaschine verbunden ist, welche eine Befestigungsklemme (4) für das Werkstück (1) trägt und dass der zweite Nocken (20) mit einer Zusatzwelle (21) verbunden ist, welche durch die Befestigungsfläche (13) der genannten Zusatzvorrichtung getragen ist und durch einen elektrischen Antrieb (8, 10) synchron mit der Geschwindigkeit und der Winkellage der Spindel in Rotation versetzt wird.

5. Vorrichtung nach Patentanspruch 4, dadurch gekennzeichnet, dass der erste Nocken (30) ein glockenförmiger Nocken ist, der aus einem Stück mit der Spindel der Bearbeitungsmaschine besteht und koaxial zu der genannten Spindel ist.

6. Vorrichtung nach Patentanspruch 4, dadurch gekennzeichnet, dass der zweite Nocken (20) ein flacher Nocken ist und die Achse der Zusatzwelle (21) rechtwinklig zur Richtung der Verschiebung des Schlittens orientiert ist.

7. Vorrichtung nach den Patentansprüchen 5 und 6, dadurch gekennzeichnet, dass die genannten Nocken einer nach dem anderen durch eine Verschiebung des Kreuz-Schlittens in Arbeitsstellung gebracht werden.

8. Vorrichtung nach einem der vorangehenden Patentansprüche, dadurch gekennzeichnet, dass der Schlitten in der Befestigungsfläche entsprechend der genannten vorbestimmten Richtung durch eine hydrostatische Wellenlagervorrichtung (22, 23, 24, 25) geführt ist.

## Claims

1. Auxiliary apparatus for the precision turning of a lateral surface (1a, 1d) of a workpiece (1) fixed in a spindle (3) of a machining center, comprising
a base (13) intended to be fixed on a support to a cross-slide (12) of said machining center,
slide means (14) movable in a predetermined direction relative to the base against the action of spring means (19)
holding means (15), integral with said slide means, for a plurality of turning tools (16, 17),
and cam control means (20, 30) comprising at least one cam driven rotatingly synchronously with the spindle, said control means ensuring displacement of the tools in the course of which each of them machines a portion of said lateral surface,
characterized in that
said slide means constitute a single slide (14), and in that
said cam control means comprise a plurality of cams for synchronized driving, each having a guide surface, and several transmission elements, mounted on said slide (18, 31), and each intended to co-operate with one of the cams,
the guide surfaces of the cams and the transmission elements being arranged so that they can be brought successively by displacements of the cross-slide into bearing positions in which said transmission elements rest against the guide surface of the cam to which it corresponds, against the action of said spring means, in a manner to control displacements of the slide.

2. Auxiliary apparatus as set forth in claim 1, characterized in that the forwarding, positioning and lifting movements of the tools are realized by the movements of the cross-slide on which auxiliary apparatus is fixed.

3. Auxiliary apparatus as set forth in one of the claims 1 or 2, characterized in that it comprises two cams.

4. Auxiliary apparatus as set forth in claim 3, characterized in that the first cam (30) is associated with the spindle (3) of the machining centre bearing a chuck (4) for the workpiece, and in that the second cam (20) is associated with an auxiliary arbour (21) borne by the base (13) of said auxiliary apparatus, and is driven in rotation sychronized in speed and in angular position to the spindle by an electric driving means (8, 10).

5. Auxiliary apparatus as set forth in claim 4, characterized in that the first cam (30) is a bell-type cam, integral with the spindle of the machining centre and coaxial therewith.

6. Auxiliary apparatus as set forth in claim 4, characterized in that the second cam (20) is a flat cam, and in that the auxiliary arbour (21) is oriented perpendicular in its axis to the direction of displacement of the slide.

7. Auxiliary apparatus as set forth in the claims 5 and 6, characterized in that the said cams are brought one behind the other in the work position by a displacment of the cross-slide.

8. Auxiliary apparatus as set forth in one of the preceding claims, characterized in that the slide is guided in the base in the said predetermined direction by a hydrostatic bearing means.
